# EUROPEAN PATENT SPECIFICATION

(11) **EP 1 827 134 B1**
(45) Date of publication and mention of the grant of the patent: **28.07.2010**
(21) Application number: 05811253.3
(22) Date of filing: 30.11.2005
(51) Int. Cl.: A23L 1/237, A23L 1/227, A23L 1/22, A23L 1/231

(54) **FLAVOUR ENHANCER**
GESCHMACKSVERSTÄRKER
RENFORCEUR DE GOUT

(30) Priority: 23.12.2004 EP 04078512; 27.06.2005 EP 05076476
(43) Date of publication of application: 05.09.2007
(73) Proprietor: Unilever PLC, London EC4Y 0DY (GB); Unilever N.V., 3013 AL Rotterdam (NL)
(72) Inventor: MÜLLER, R G, Unilever Bestfoods Deutschland GmbH, 74074 Heilbronn (DE); GLAETSCH, B, Unilever Bestfoods Deutschland GmbH, 74074 Heilbronn (DE)
(74) Representative: Tjon, Hon Kong Guno
(86) International application number: PCT/EP2005/012950
(87) International publication number: WO 2006/066716

(56) References cited:
- EP-A- 0 124 254
- EP-A- 0 377 119
- EP-A- 1 163 853
- EP-A- 1 344 459
- WO-A-92/15206
- WO-A-97/27763
- US-A- 5 173 323

## Description

This invention relates to the field of flavour enhancers for savoury food products and in particular to sodium-free compositions which enhance the taste in savoury food products.

### Background of the invention

Savoury food products enjoy a wide popularity around the globe. The taste of savoury food products is often enhanced with a variety of compounds. One of the most popular is sodium glutamate that is sometimes referred to as a universal flavour enhancer. However, glutamate as a flavour enhancer does not always harmonise with the food taste which is to be accentuated. For example, glutamate as flavour enhancer may be liked in consomme, but is objectionable in a cucumber salad, whilst a celery note can enhance the taste of cucumber salad but is considered extremely objectionable in mashed potato.

In addition, consumer acceptance of added glutamate has decreased dramatically in recent years. Therefore, flavour enhancers having glutamate are less desirable.

WO 03/075684 discloses seasoning compositions useful savoury foods. The seasoning disclosed comprises a mixture of nucleotide flavour enhancers (also known as 5'-ribotides) and organic acids (acetic, ascorbic, aspartic, citric, fumaric, malic, tartaric, succinic or lactic acid) or salts thereof. Some of the formulations disclosed contain also yeast extract, and yeast extract (if no countermeasures are taken) will contain glutamate.

It was found, however, that the taste effect as obtained by WO 03/075684 (nucleotide flavour enhancers in combination with organic acids) is a bit "lean" instead of a full-bodied, rounded-off taste.

US 6,190,709 discloses a soy hydrolysate as a flavour enhancer. The disclosed flavour enhancer is (being substantially free of 5'-IMP and 5'-GMP), obtained by hydrolysing a soy source with a protease mixture comprising by endo- and exoprotease activity, inactivating the enzyme and concentrating. However, this flavour enhancer still comprises glutamate.

US 3,615,600 discloses meat flavour compositions comprising amino acids (including glutamic acid and its salts), nucleotides (such as 5'-IMP and 5'-GMP), succinic acid, and a lower carboxylic acid (such as lactic acid), wherein it is said that for a "full" taste a specific ratio of succinic and the further organic acid (particularly lactic acid) is required. The amino acids can be obtained by lysis or fermentation of soybeans, yeast, casein, gluten. Various classes of additional compounds are mentioned. GB 1,076,948 discloses meat flavouring compositions comprising organic acids, amino acids (17 are specifically referred to) and 5'-nucleotides. However the latter two references seem specific meat flavours rather than more general flavour enhancers.

US 5 173 323 describes a sodium-free and glutamate free flavor enhancer comprising amino acid lysine, adipic acid and Kcl (50-80%). A flavor enhancer containing above mentioned flavor enhancer and Nacl (3:1).

In addition, many flavour enhancers rely on the presence of sodium. In fact glutamate is usually added as monosodium glutamate. Excessive dietary sodium intake, has long been suspected as a source of a number of health problems. Consequently, a reduction in sodium consumption would imply benefits for the health of most people.

Thus, there remains a need for an improved flavour enhancer for savoury food products which is preferably sodium-free and glutamate-free and is applicable in a wide variety of savoury food products with minimal off tastes.

### Summary of the Invention

A first aspect of the invention provides an improved sodium-free, glutamate free flavour enhancer for savoury food products comprising
a) more than 10 wt% of an amino acid selected from arginine and/or lysine,
b) adipic acid,
c) 50 to 80 wt% of KCI
d) 0 to 20 wt% of an ammonium salt by weight of the total flavour enhancer
whereby the weight ratio between the amino acid and adipic acid is at least and 20 :6, preferably at least 20 :4 more preferably at least 20 : 3 and preferably at most 40 : 0.4, more preferably at most 60:1 most preferably at most 40: 1.

A second aspect of the invention provides a food product comprising a sodium-free and glutamate-free flavour enhancer according to any one of the preceding claims and NaCl wherein the weight ratio of NaCl to said flavour enhancer is at least and 1 :3, preferably at least 1 : 2 more preferably at least 1 : 1 and preferably at most 20 : 1, more preferably at most 10:1 most preferably at most 7:1.

A third aspect of the invention provides process to prepare a sodium-free and glutamate-free flavour enhancer according to the invention comprising the step of mixing said ingredients as dry material at a temperature of less than 50 °C, preferably less than 40°C, more preferably less than 30°C..

### Detailed description of the invention

For brevity, the sodium-free and glutamate-free flavour enhancer will also referred to as flavour enhancer below. The term "sodium-free" for the purpose of the present application is understood to mean a flavour enhancer comprising less than 3.0 wt%, preferably less than 1.0 wt% more preferably less than 0.5 wt% of sodium by weight of the total composition.
The term "glutamate-free" for the purpose of the present application is understood to mean a flavour enhancer comprising less than 1 wt%, preferably less than 0.5 wt% more preferably less than 0.1 wt% of glutamate by weight of the total composition. The term glutamate is meant to encompass the presence of its conjugate acid glutamic acid, i.e., to calculate the presence of glutamate all glutamic acid is assumed to be present as glutamate.

We have found that an improved sodium-free flavour enhancer can be provided whereby the flavour enhancer has a composition as described. It is to be understood that the flavour-enhancing composition of the invention is a flavour enhancer and thus requires a minimum amount of sodium chloride in the food product to be consumed, namely at least about 0.02% by weight, based upon the weight of the food product. For the purpose of this application, the term "savoury food product" is meant to describe a food product at least about 0.02% NaCl by weight, based upon the weight of the food product.

Surprisingly, the inventive flavour enhancer carries minimal off-tastes compared to known flavour enhancers. In addition, the inventive flavour enhancer can be used with a wide variety of food products. Preferred food products include a seasoning, a stock cube, sauce, a soup, a dressing, a side dish, a meal, a dessert, a spread, an ice cream, confectionery or a beverage. Preferably the food product is a dry food product. For this purpose a dry food product is meant to describe a food product that needs to be contacted with an aqueous base before consumption. Non-limiting examples are (pasta) meal kits, seasonings, dried soups, stock cubes and dried sauces. The latter three food products typically need to be mixed with water to prepare a soup, a stock, and a sauce respectively. Seasonings can be added to an aqueous base like a soup or sauce. Meal kits often comprise a dried sauce or seasoning.

The amino acid in the sodium-free flavour enhancer can be lysine, arginine or a mixture thereof. The amino acid may used it's D- or L- form or a mixture thereof. Preferred is the L form. The amino acid can be added as such or preferably in the Hydrochloride form. Presently lysine is an essential amino acid which is commercially available. L-lysine hydrochloride and arginine hydrocloride are available from various sources (such as Ajinomoto, Degussa, ADM and Bio Kyowa, Inc.) For an improved taste, the amount of amino acid present in the flavour enhancer is less than 45 wt% preferably less than 40 wt% more preferably less than 35 wt% and preferably more than 10 wt%, preferably more than 15 wt%, most preferably more than 20 wt%. Most preferred are the mono hydrochloride forms of the amino acids.

When present the amount of adipic acid in the flavour enhancer according to the invention is less than 15 wt% preferably less than 10 wt% more preferably less than 3 wt% and preferably more than 0.01 wt%, preferably more than 0.3 wt%, most preferably more than 0.5 wt% by weight of the flavour enhancer.

The flavour enhancer may also comprise an ammonium salt. When present the amount of ammonium salt is less than 25 wt % preferably less than 15 wt % more preferably less than 10 wt% and preferably more than 1 wt%, preferably more than 3 wt%, most preferably more than 5 wt% by weight of the flavour enhancer. The ammonium salt may be any ammonium salt safe for human consumption with minimal off taste. One preferred ammonium salt is NH₄Cl.
With a view to the preparation of the mixture and the flow characteristics of the potassium chloride employed, it is preferred to use a potassium chloride which contains from 0.2 to 1.0% by weight, especially from 0.5 to 0.8% by weight, of highly disperse silica.

Preferably, the flavour enhancer comprises less than 10 wt% of succinic acid, preferably less than 5 wt%, even more preferably less than 0.1 wt% of succinic acid by weight of the total composition. The flavour enhancer may comprises less than 10 wt% of a nucleotide, preferably less than 5 wt%, even more preferably less than 0.1 wt% of nucleotide by weight of the total composition.

To allow practical use of a sodium-free flavour enhancer, it preferably has a pure white colour, complete solubility in water, stability on boiling, free flow, freedom from dust, non-hygroscopic behaviour, no tendency to separate, and a virtually neutral pH of the aqueous solution, namely from 6 to 8.

For an improved functionality, the flavour enhancer preferably has an average particle size of from 0.01 to 2 mm, more preferably from 0.05 to 1 mm, most preferably from 0.1 to 0.4 mm. For the purpose of the present invention, the size of the flavour particles is meant to refer to volume weighted mean diameter' denoted by D[4,3] as described by M. Alderliesten in Part. Part. Syst. Charact., 7 (1990), 233-241. This is preferably determined by a Malvern Mastersizer X particle analyser.

Although not limited thereto, the flavour enhancer of the invention may also be suited for use in the domestic/household setting, where it may be employed to season foods during preparation or at the time of consumption, i.e., at the stove or table. Thus, the flavour enhancing composition of the invention may be packaged in suitable containers or dispensers, e.g., shakers, which may be provided with instructions for measurement and/or use in combining with food products.

The inventive flavour enhancer composition may be used in any food product to enhance the savoury flavour. When added to a food product comprising NaCl, the weight ratio of NaCl to said flavour enhancer is at least and 1 : 3, preferably at least 1 : 2 more preferably at least 1 : 1 and preferably at most 20 : 1, more preferably at most 10:1 most preferably at most 7 : 1.

From a processing point of view it is advantageous that only a few ingredients are needed to prepare the inventive flavour enhancer. Other flavour enhancers often rely on complex mixtures of number of nucleotides and hydrolysates.

The flavour enhancer according to the invention may be prepared mixing the ingredients thereof. Preferably, the process to prepare the flavour enhancer comprises the step of mixing said ingredients as dry material at a temperature of less than 50 °C, preferably less than 40°C, preferably less than 30°C.

Other than in the examples, or where otherwise indicated, all numbers expressing quantities of ingredients or reaction conditions used herein are to be understood as modified in all instances by the term "about". Similarly, all percentages are weight/weight percentages of the total flavour enhancer composition unless otherwise indicated. Where the term "comprising" is used in the specification or claims, it is not intended to exclude any terms, steps or features not specifically recited. Where different ranges are given for a technical feature such as a specific ingredient or process condition, all sub ranges subsumed therein are included. Numerical ranges expressed in the format "from x to y" are understood to include x and y. Unless specified otherwise temperatures are in degrees Celsius (°C) and measurements are carried out at 20°C and normal pressure. All documents cited are in relevant part, incorporated herein by reference.

The invention is more fully illustrated by the following non-limiting examples showing some preferred embodiments of the invention.

### Examples

The flavour and aftertaste of different flavour enhancers was tested using the Arthur D. Little (ADL) Flavour Profile Method:
- Flavour is evaluated by tasting the sample in mouth and swallowing it (i.e. includes aromatics, basic tastes and mouthfeel factors).
- Aftertaste is the sensation which is still present in mouth one minute after swallowing.

For the ADL method a panel of highly trained assessors was used, who first independently study the product's aroma and flavour and subsequently agree in an open discussion upon a consensus profile. Each sample is being evaluated four times in four consequent separate sessions. The panel selects references for a standardised definition of the vocabulary. The reference materials are kept in glass jars (200 ml) with twist-off lids. Before starting each session, panel members sniff on the references. Additionally, each panellist has a set of basic taste solutions which are used to ensure calibration of each panellist on the basic taste intensity scale.

### Flavour Enhancer Compositions A to H (according to the invention)

| Ingredient (wt%) | | | | | | | | |
|---|---|---|---|---|---|---|---|---|
| | A | B | C | D | E | F | G | H |
| L-lysine | | 29 | | | 32 | 25 | | 15 |
| Arginine | 19 | | 24 | 24 | | | 28 | 10 |
| Adipic Acid | 1 | 2 | 2 | 2 | 2 | 1 | 1 | 2 |
| KCI | 80 | 69 | 74 | 65 | 66 | 75 | 60 | 67 |
| NH₄Cl | | | | 9 | | 8 | 11 | 6 |
| | | | | | | | | |
| Ratio amino acid : adipic acid | 19:1 | 29: 2 | 24: 2 | 24:2 | 32:2 | 25:1 | 28:1 | 25:2 |

### Compositions I and J: Use of the flavour enhancer in a savoury food product

The flavour enhancer according to the invention was used successfully in a pasta meal kit with a composition as set out below. The pasta meal kit (equivalent to 2.13 servings) was prepared according to the instructions (Boil 2 cups water (approx. 460 ml) with 1tbsp margarine in a sauce pan, add dry mix and stir, let cook for additional 8 min). Surprisingly, the addition of the flavour enhancer enhanced the savoury taste without unacceptable off tastes or increasing the amount of sodium and glutamate (Composition J). In fact, it turned out that the savoury taste of composition J was similar to a composition I with an additional 0.59 g of NaCl. The weight ratio of NaCl to Flavour Enhancer was 3.4 to 1

### Pasta meal kit (g dry weight)

| | I | J |
|---|---|---|
| SPRAY DRIED BUTTER | 9 | 9 |
| VEGETABLE OIL-DRIED | 7.2 | 7.2 |
| CORNSTARCH | 3.6 | 3.6 |
| SUCROSE | 2.9 | 2.9 |
| NaCl | 1.85 | 1.85 |
| AUTOLYZED YEAST | 2.5 | 2.5 |
| WHITE ON POWDER | 1.8 | 1.8 |
| DAIRY BLEND | 1.08 | 1.08 |
| FLAVOUR AND HERBS | 0.75 | 0.75 |
| Flavour Enhancer D | 0 | 0.55 |
| PASTA | 103.00 | 103.00 |

### Compositions K and L: Use of the flavour enhancer in a savoury food product

The flavour enhancer according to the invention can be used successfully in a dry soup composition with a composition as set out below. The soup was prepared according to the instructions (Add content into a cup and pour over with 175 ml of boiling water. Stir well until disolved and serve). The soup according composition K does not have a satisfactory savoury taste. Surprisingly, the addition of flavour enhancer enhanced the savoury taste without unacceptable off tastes or increasing the amount of sodium and glutamate (composition L). The weight ratio of NaCl to Flavour Enhancer was 2.1 to 1

### Dry soup composition (g dry weight)

| | K | L |
|---|---|---|
| Tomato powder | 5.0 | 5.0 |
| Sugar | 4.6 | 4.6 |
| Garnish | 3.4 | 3.4 |
| Starch | 2.0 | 2.0 |
| NaCl | 1.18 | 1.18 |
| Palmfat | 1 | 1 |
| Maltodextrin | 0.7 | 0.7 |
| MSG | 0.5 | 0.5 |
| Vegetable powder | 0.4 | 0.4 |
| Flavours | 0.31 | 0.31 |
| Herbs | 0.13 | 0.13 |
| Xanthan | 0.1 | 0.1 |
| Organic acid | 0.06 | 0.06 |
| Flavour Enhancer D | 0 | 0.57 |

### Flavour Enhancer Compositions M (comparative example) and N (according to the invention)

| Ingredient (wt%) | | |
|---|---|---|
| | M | N |
| L-Arginine Monohydrochloride | 50 | 24 |
| Adipic Acid | 40 | 2 |
| KCI | 10 | 74 |
| | | |
| Ratio amino acid : adipic acid | 5:4 | 12: 1 |

Flavour Enhancer Compositions M (comparative example) and N (according to the invention) were compared using Focussed Attribute Profiling. Composition N according to the invention was more preferred than composition M (comparative example).

## Claims

1. A sodium-free and glutamate-free flavour enhancer for savoury food products comprising
a) more than 10 wt% of an amino acid selected from arginine and/or lysine,
b) adipic acid,
c) 50 to 80 wt% of KCI
d) 0 to 20 wt% of an ammonium salt by weight of the total flavour enhancer whereby the weight ratio between the amino acid and adipic acid is at least 20 :6, preferably at least 20 :4 more preferably at least 20 : 3 and preferably at most 40 : 0.4, more preferably at most 60:1 most preferably at most 40: 1.

2. A sodium-free and glutamate-free flavour enhancer according to claim 1 wherein the amount of adipic acid is less than 15 wt% preferably less than 10 wt% more preferably less than 3 wt% and preferably more than 0.01 wt%, preferably more than 0.3 wt%, most preferably more than 0.5 wt%.

3. A sodium-free and glutamate-free flavour enhancer according to claim 1 or 2 wherein the amount of amino acid is less than 45 wt% preferably less than 40 wt% more preferably less than 35 wt% and preferably more than 15 wt%, most preferably more than 20 wt%.

4. A sodium-free and glutamate-free flavour enhancer according to any one of the preceding claims wherein the amount of ammonium salt is less than 25 wt % preferably less than 15 wt % more preferably less than 10 wt % and preferably more than 1 wt%, preferably more than 3 wt%, most preferably more than 5 wt%.

5. A sodium-free and glutamate-free flavour enhancer according to any one of the preceding claims wherein the amino acid is in the monohydrochloride form, preferably the amino acid is L-arginine monohydrochloride.

6. A sodium-free and glutamate-free flavour enhancer according to any one of the preceding claims having an average particle size of from 0.01 to 2 morn, more preferably from 0.05 to 1 mm, most preferably from 0.1 to 0.4 mm.

7. A food product comprising a sodium-free and glutamate-free flavour enhancer according to any one of the preceding claims and NaCl wherein the weight ratio of NaCl to said flavour enhancer is at least and 1 :3, preferably at least 1 : 2 more preferably at least 1 : 1 and preferably at most 20 : 1, more preferably at most 10:1 most preferably at most 7 : 1.

8. A food product according to claim 7 wherein the food product is a seasoning, a stock cube, sauce, a soup, a dressing, a side dish, a meal, a dessert, a spread, an ice cream, confectionery or a beverage.

9. A food product according to claim 7 or 8 wherein the food product is a dry food product.

10. A process to prepare a sodium-free and glutamate-free flavour enhancer according any one of the preceding claims comprising the step of mixing said ingredients as dry material at a temperature of less than 50°C, preferably less than 40°C, more preferably less than 30°C.

## Patentansprüche

1. Natrium-freier und Glutamat-freier Geschmacksverstärker für herzhafte Nahrungsmittelprodukte, umfassend
a) mehr als 10 Gewichts-% einer Aminosäure, ausgewählt aus Arginin und/oder Lysin,
b) Adipinsäure,
c) 50 bis 80 Gewichts-% KCI,
d) 0 bis 20 Gewichts-% eines Ammoniumsalzes, bezogen auf das Gewicht des gesamten Geschmacksverstärkers, wobei das Gewichtsverhältnis zwischen der Aminosäure und der Adipinsäure wenigstens 20:6, vorzugsweise wenigstens 20:4, bevorzugter wenigstens 20:3 und vorzugsweise höchstens 40:0,4, bevorzugter höchstens 60:1, am bevorzugtesten höchstens 40:1 ist.

2. Natrium-freier und Glutamat-freier Geschmacksverstärker nach Anspruch 1, wobei die Menge an Adipinsäure weniger als 15 Gewichts-%, vorzugsweise weniger als 10 Gewichts-%, bevorzugter weniger als 3 Gewichts-% und vorzugsweise mehr als 0,01 Gewichts-%, vorzugsweise mehr als 0,3 Gewichts-%, am bevorzugtesten mehr als 0,5 Gewichts-% ist.

3. Natrium-freier und Glutamat-freier Geschmacksverstärker nach Anspruch 1 oder 2, wobei die Menge an Aminosäure weniger als 45 Gewichts-%, vorzugsweise weniger als 40 Gewichts-%, bevorzugter weniger als 35 Gewichts-% und vorzugsweise mehr als 15 Gewichts-%, am bevorzugtesten mehr als 20 Gewichts-% ist.

4. Natrium-freier und Glutamat-freier Geschmacksverstärker nach irgendeinem der vorangehenden Ansprüche, wobei die Menge an Ammoniumsalz weniger als 25 Gewichts-%, vorzugsweise weniger als 15 Gewichts-%, bevorzugter weniger als 10 Gewichts-% und vorzugsweise mehr als 1 Gewichts-%, bevorzugter mehr als 3 Gewichts-%, am bevorzugtesten mehr als 5 Gewichts-% ist.

5. Natrium-freier und Glutamat-freier Geschmacksverstärker nach irgendeinem der vorangehenden Ansprüche, wobei die Aminosäure die Monohydrochloridform ist, vorzugsweise die Aminosäure L-Arginin-Monohydrochlorid ist.

6. Natrium-freier und Glutamat-freier Geschmacksverstärker nach irgendeinem der vorangehenden Ansprüche, der eine durchschnittliche Partikelgröße von 0,01 bis 2 mm, bevorzugter von 0,05 bis 1 mm, am bevorzugtesten von 0,1 bis 0,4 mm hat.

7. Nahrungsmittelprodukt, umfassend einen Natrium-freien und Glutamat-freien Geschmacksverstärker nach irgendeinem der vorangehenden Ansprüche und NaCl, wobei das Gewichtsverhältnis von NaCl zu dem Geschmacksverstärker wenigstens 1:3, vorzugsweise wenigstens 1:2, bevorzugter wenigstens 1:1 und vorzugsweise höchstens 20:1, bevorzugter höchstens 10:1, am bevorzugtesten höchstens 7:1 ist.

8. Nahrungsmittelprodukt nach Anspruch 7, wobei das Nahrungsmittelprodukt eine Würze, ein Bouillonwürfel, eine Soße, eine Suppe, ein Dressing, eine Beilage, eine Mahlzeit, ein Dessert, ein Aufstrich, ein Speiseeis, ein Konfektprodukt oder ein Getränk ist.

9. Nahrungsmittelprodukt nach Anspruch 7 oder 8, wobei das Nahrungsmittelprodukt ein trockenes Nahrungsmittelprodukt ist.

10. Verfahren zur Herstellung eines Natrium-freien und Glutamat-freien Geschmacksverstärkers nach irgendeinem der vorangehenden Ansprüche, umfassend den Schritt des Mischens der angegebenen Ingredienzien als trockenes Material bei einer Temperatur von weniger als 50 °C, vorzugsweise weniger als 40 °C, bevorzugter weniger als 30 °C.

## Revendications

1. Exhausteur de goût sans sodium et sans glutamate pour des produits alimentaires savoureux comprenant :
a) plus de 10 % en poids d'un acide aminé choisi parmi l'arginine et/ou la lysine,
b) un acide adipique,
c) de 50 à 80 % en poids de KCl,
d) de 0 à 20 % en poids d'un sel d'ammonium, sur la base du poids total de l'exhausteur de goût, pour que le rapport en poids entre l'acide aminé et l'acide adipique soit d'au moins 20/6, de préférence, d'au moins 20/4, plus préférablement, d'au moins 20/3 et de préférence, d'au plus 40/0,4, plus préférablement, d'au plus 60/1, et de manière préférée entre toutes, d'au plus 40/1.

2. Exhausteur de goût sans sodium et sans glutamate selon la revendication 1, dans lequel la quantité d'acide adipique est inférieure à 15 % en poids, de préférence, inférieure à 10 % en poids, plus préférablement, inférieure à 3 % en poids et de préférence, supérieure à 0,01 % en poids, de préférence, supérieure à 0,3 % en poids, et de manière préférée entre toutes, supérieure à 0,5 % en poids.

3. Exhausteur de goût sans sodium et sans glutamate selon la revendication 1 ou 2, dans lequel la quantité d'acide aminé est inférieure à 45 % en poids, de préférence, inférieure à 40 % en poids, plus préférablement, inférieure à 35 % en poids et de préférence, supérieure à 15 % en poids, et de manière préférée entre toutes, supérieure à 20 % en poids.

4. Exhausteur de goût sans sodium et sans glutamate selon l'une quelconque des revendications précédentes, dans lequel la quantité de sel d'ammonium est inférieure à 25 % en poids, de préférence, inférieure à 15 % en poids, plus préférablement, inférieure à 10 % en poids et de préférence, supérieure à 1 % en poids, de préférence, supérieure à 3 % en poids, et de manière préférée entre toutes, supérieure à 5 % en poids.

5. Exhausteur de goût sans sodium et sans glutamate selon l'une quelconque des revendications précédentes, dans lequel l'acide aminé est sous la forme d'un monochlorhydrate, de préférence, l'acide aminé est un monochlorhydrate de L-arginine.

6. Exhausteur de goût sans sodium et sans glutamate selon l'une quelconque des revendications précédentes ayant une taille de particule moyenne de 0,01 à 2 mm, plus préférablement, de 0,05 à 1 mm, et de manière préférée entre toutes, de 0,1 à 0,4 mm.

7. Produit alimentaire comprenant un exhausteur de goût sans sodium et sans glutamate selon l'une quelconque des revendications précédentes et du NaCl, dans lequel le rapport en poids du NaCl audit exhausteur de goût est d'au moins 1/3, de préférence, d'au moins 1/2, plus préférablement, d'au moins 1/1 et de préférence, d'au plus 20/1, plus préférablement, d'au plus 10/1, et de manière préférée entre toutes, d'au plus 7/1.

8. Produit alimentaire selon la revendication 7, dans lequel le produit alimentaire est un assaisonnement, un bouillon cube, une sauce, une soupe, une vinaigrette, un plat d'accompagnement, un repas, un dessert, un produit à tartiner, une glace, une confiserie ou une boisson.

9. Produit alimentaire selon la revendication 7 ou 8, dans lequel le produit alimentaire est un produit alimentaire déshydraté.

10. Procédé de préparation d'un exhausteur de goût sans sodium et sans glutamate selon l'une quelconque des revendications précédentes comprenant l'étape de mélange desdits ingrédients sous la forme d'un matériau déshydraté à une température inférieure à 50°C, de préférence, inférieure à 40°C, plus préférablement, inférieure à 30°C.
